# EUROPÄISCHE PATENTSCHRIFT

(11) **EP 1 515 409 B1**
(45) Veröffentlichungstag und Bekanntmachung des Hinweises auf die Patenterteilung: **14.05.2014**
(21) Anmeldenummer: 04021628.5
(22) Anmeldetag: 10.09.2004
(51) Int. Cl.: H02B 7/08

(54) **Unterirdische Schaltanlage**
Underground switchgear
Installation de commutation souterraine

(30) Priorität: 10.09.2003 DE 10341784
(43) Veröffentlichungstag der Anmeldung: 16.03.2005
(73) Patentinhaber: Berthold Sichert GmbH, 12277 Berlin (DE)
(72) Erfinder: Irmer, Günter, 13055 Berlin (DE)
(74) Vertreter: Strych, Werner Maximilian Josef

(56) Entgegenhaltungen:
- DE-A1- 3 423 184
- DE-U- 1 964 787
- US-A- 4 709 120

## Beschreibung

### I. Anwendungsgebiet

Die Erfindung betrifft unterirdische Schaltschränke für die Installation und Verschaltung elektrischer und optischer Leitungen.

### II. Technischer Hintergrund

Schaltschränke im Außenbereich, um die es hier geht, werden häufig benötigt, um Schwachstromverkabelungen, insbesondere für die Telekommunikation, zu schalten, wofür in den Schaltschränken u. a. auch aktive, Stromverbrauchende, Komponenten enthalten sind.

Derartige Schaltschränke bestehen üblicherweise aus einem Schaltschrankgestell, welches nach Art eines z. B. Rahmens die Stabilität vorgibt, und an welchem die Schaltschrank-Komponenten, die mit den zu- und abführenden elektrischen Kabeln verbunden werden, befestigt sind, und sind von einem umgebenden Gehäuse geschützt.

In letzter Zeit gehen jedoch Kommunen verstärkt dazu über, die oberirdische Montage solcher z. B. Telefon-Schaltschränke vor Häusern, z. B. auf Fuß- und Radwegen oder anderem öffentlichen Grund, zu untersagen und fordern stattdessen im Untergrund versenkte Schaltschränke. Dadurch sollen die optischen Möglichkeiten der Gestaltung des öffentlichen Raumes verbessert und der öffentliche Raum nicht reduziert werden.

Auch die Telekommunikationsfirmen stehen diesem Gedanken nicht unbedingt negativ gegenüber, da derartige unterirdische Schaltschränke in der Erstinvestition zwar teurer sind als die überirdischen Varianten, auf der anderen Seite jedoch das Risiko von Beschädigungen, insbesondere durch Kraftfahrzeuge, dadurch ausgeschlossen wird. Angesichts der zum Teil sechsstelligen Kosten für die Wiederherstellung eines umgefahrenen oberirdischen Schaltschranks bzw. die Vermeidung diesbezüglicher hoher Versicherungsprämien amortisiert dies die Mehrkosten gleich mehrerer unterirdischer Schaltschränke, ganz abgesehen von der vermiedenen Netz-Ausfallzeit.

Die meisten bisherigen Lösungen derartiger unterirdischer Schaltschränke zielen darauf ab, in einer meist mehrteilig ausgekleideten abzudichtenden Grube, die oft auch selbst aus verschiedenen Materialien besteht, im Untergrund den Schaltschrank auf einer Hebemechanik anzuordnen. Für Reparatur- und Wartungsarbeiten am unterirdischen Schaltschrank wird also die Abdeckung der unterirdischen Auskleidung entfernt und mittels der integrierten Mechanik das Schaltschrankgestell mit den darin befindlichen Schaltschrankkomponenten auf ein Niveau oberhalb der Erdgleiche angehoben, so dass der Monteur oberirdisch daran arbeiten kann.

Nachteilig ist dabei, dass zum einen eine solche Hubmechanik sehr langlebig ausgebildet sein muss und daher entsprechend teuer wird und vor allem, dass durch die Anhebbarkeit des gesamten Schaltschrankes die Kabelverbindung vom Erdkabel zum Schaltschrank eine ausreichend große Kabelreserve enthalten muss, die im abgesenkten Zustand sicher und knickfrei untergebracht werden muss, und darüber hinaus die beim Heben und Senken des Schaltschrankes bewegten Kabel die abgedichteten Kabeleinlässe belasten und häufig zu einer Undichtigkeit dieser Dichtungssysteme führen. Die Folge ist dann - zunächst unbemerkter - Wassereinbruch über die Kabeleinführung in die Grubenauskleidung und in der Folge ein Kurzschluss und/oder Ausfall bzw. Unbrauchbarkeit der Technik im Schaltschrank.

Aus der DE 1964787, die den nächstreichenden Stand der Technik darstellt, ist ein unterirdischer Behälter zum Unterbringen von Trafos bekannt, der aus Kunststoff besteht, allerdings aus mehreren Segmenten zusammengesetzt ist, die über Verbindungsringe miteinander verbunden sind. Der unterirdische Behälter ist somit nicht einstückig, und es tritt somit ein Dichtigkeitsproblem auf.

Zusätzlich sind die hier unterzubringenden Transformatoren sehr viel größer als die Schaltschränke in der vorliegenden Erfindung, weshalb eine sehr große Einführöffnung für die Transformatoren benötigt wird, die schwerer abzudichten ist, weshalb für den Mann-Einstieg zusätzlich daneben eine kleinere Einstiegsöffnung in einem nebengeordneten Einstiegsturm vorgesehen ist.

Spezielle Ausbildungen des Deckels und weitere Details zeigt diese Schrift nicht.

Aus der US 4709120 sowie der DE 3423184 A1 sind weitere unterirdische Behälter bekannt, die hinsichtlich der äußeren Hülle aus Beton bestehen, wobei bei der letztgenannten Schritt Arbeiten am Schaltschrank gar nicht im Behälter durchgeführt werden, sondern dieser mithilfe einer Hubvorrichtung aus dem unterirdischen Behälter jeweils herausgeschwenkt wird. Dies erfordert es natürlich, dass der Behälter nur knapp unter der Erdoberfläche eingebaut wird.

### III. Darstellung der Erfindung

### a) Technische Aufgabe

Es ist daher die Aufgabe gemäß der Erfindung, einen unterirdischen Schaltschrank sowie ein Verfahren zu dessen Installation zu schaffen, welches trotz einfacher und kostengünstiger Realisierbarkeit die Nachteile des Standes der Technik vermeidet.

### b) Lösung der Aufgabe

Diese Aufgabe wird durch die Merkmale der Ansprüche 1 und 11 gelöst. Vorteilhafte Ausführungsformen ergeben sich aus den Unteransprüchen.

Durch die feste Positionierung des Unterflur-Behälters im Untergrund und die ebenso positionsfeste Anordnung des Schaltschrankgestells im Behälter wird jegliche Bewegung der mit den Erdkabeln verbundenen, am Schaltschrankgestell befestigten, Schaltschrank-Komponenten vermieden und damit die Gefahr eines Undichtwerdens der Kabeleinlässe.

Zur Durchführung von Wartungs- und Reparaturarbeiten am Schaltschrank werden also nicht die Funktionsteile, nämlich das Gestell des Schaltschrankes samt den daran befestigen Schaltschrank-Komponenten, zum oberirdisch stehenden Monteur gebracht, sondern umgekehrt steigt der Monteur durch das Mannloch in den Behälter zu den Schaltschrank-Komponenten hinab. Damit sich der Monteur im Inneren des Behälters neben den Schaltschrank-Komponenten ausreichend bewegen kann, muss der Behälter entsprechend größer als der Raumbedarf für die Schaltschrank-Komponenten gewählt werden.

Dadurch steigt auch der Raumbedarf für die Baugrube. Da jedoch unabhängig von der gewählten Lösung eine Grube ohnehin ausgehoben werden muss, ist eine um ca. 40-60% vergrößerte Grube der geringere Aufwand, zumal dies nur ein einziges mal anfällt, gegenüber den zum Stand der Technik auf Dauer beschriebenen Risiken.

Auch das Einbringen des Schaltschrankgestells sowie der Schaltschrank-Komponenten durch das Mannloch ist nur ein begrenzter Nachteil, zumal - abhängig von den Relationen zwischen Mannloch und Schaltschrankgestell - das Schaltschrankgestell im Ganzen oder zumindest in mehreren größeren Teilkomponenten durch das Mannloch eingebracht und im Inneren montiert werden kann, und zumindest diese Montage des Gestells ebenso wie die Montage der Leiter und anderer Innenausbauteile des Behälters nicht vor Ort, sondern vorab werkseitig erfolgen kann.

Selbst die Ausstattung mit Schaltschrank-Komponenten, die normalerweise nach Einsetzen des Behälters im Untergrund und dessen Verfüllung erfolgt, kann - sofern vorher bekannt - zumindest teilweise vor dem Einbringen des Behälters in den Untergrund ebenfalls bereits werkseitig erfolgen.

Ein weiterer Vorteil ist die Witterungsunabhängigkeit bei Wartungs- und Montagearbeiten, da der Monteur - bei entsprechender Abdeckung des Mannloches - witterungsunabhängig im Inneren des Behälters arbeiten kann, wo auch die Beleuchtung aufgrund des verfügbaren elektrischen Stromes kein Problem darstellt.

Da keine schwere und kraftintensive Hubmechanik im Inneren des Behälters benötigt wird, kann ein solcher Behälter gegenüber den Lösungen des Standes der Technik aus kostengünstigem und leichtem Kunststoff und üblicherweise einstückig, z. B. im Rotationsformverfahren, hergestellt und damit ohne Dichtungsprobleme bestehen, anstelle der üblicherweise aus Beton oder zumindest stark mit Glasfaser und ähnlich teuren Materialien verstärkten Auskleidungen der Bodengrube beim Stand der Technik.

Der Unterflur-Behälter ist für die Aufnahme eines Schaltschrankgestells entsprechend ausgestattet:

Die obere Öffnung des Behälters ist ausreichend groß, damit ein Mensch hindurchsteigen kann, und nicht nur Schläuche oder Reinigungslanzen zum Reinigen des Behälters hindurchgesteckt werden können. Desweiteren ist im Inneren des Behälters unterhalb der als Mannloch dienenden oberen Öffnung eine Leiter oder entsprechende Trittvorrichtungen an der Wand des Behälters angebracht, damit ein Monteur in den Behälter hinabsteigen kann.

Die Grundfläche des Behälterinneren ist ausreichend groß, damit neben den Schaltschrankgestellen auch Raum für das Bewegen des Monteurs vorhanden ist, und zu diesem Zweck sind in definierten Flächenbereichen, auf denen der Monteur gehen und stehen muss, trittfeste Laufflächen vorhanden, die das Gewicht eines Menschen ohne Beeinträchtigung aushalten können. Es sind dies entweder einstückig zusammen mit dem Behälter ausgebildete Laufflächen, z. B. in Form einzelner emporstehender Rippen oder Noppen, oder es sind dies nachträglich in den Behälter eingebrachte Laufflächen, wie Kraftverteilende Bodenplatten, z. B. auch aus schweren Materialien wie Beton, die dann benutzt werden, wenn ein Aufschwimmen des Behälters aufgrund hoher Grundwasserlage zu befürchten ist. Gegen Aufschwimmen wird auch eine Bodenplatte aus Beton unterhalb des Behälters in die Grube eingesetzt, mit der der Behälter fest verbunden, z. B. eingegossen, wird.

Ferner sind im Inneren des Behälters Befestigungspunkte, insbesondere in Form von von den Wänden und/oder ggf. auch von der Decke und/oder dem Boden vorstehenden Befestigungsvorsprüngen, an definierten Positionen vorhanden, an denen z. B. das Schaltschrankgestell, die Leiter, Kabelführungen, eine Sitzgelegenheit, Ablageflächen und andere fixiert werden kann. Diese Befestigungsvorsprünge, die vorzugsweise einstückig zusammen mit dem Behälter ausgebildet sind, weisen beispielsweise nach außen offene Gewindebuchsen, Muttern oder ähnliches auf.

Der gesamte Behälter ist dabei flüssigkeitsdicht ausgebildet bis auf die obere Öffnung, die erst nach Verschließen mittels eines Deckels ebenfalls flüssigkeitsdicht ist. Vorzugsweise besteht der Behälter aus Kunststoff und ist einstückig, also monolithisch, z. B. durch Rotationsformen, hergestellt.

Dabei ist der Behälterdeckel vorzugsweise gegenüber dem Behälter nicht nur verriegelbar, sondern auch absperrbar und besteht aus einem stark belastbaren Material, beispielsweise aus Stahlguss, um auch ein Überfahren durch Kraftfahrzeuge auszuhalten. Darüber hinaus kann der Behälterdeckel auch weitere Funktionen erfüllen wie etwa ein integriertes Meldesystem enthalten, welches automatisch das Öffnen des Deckels an eine zentrale Kontrollstelle meldet, eine integrierte Beund Entlüftungsvorrichtung, insbesondere kombiniert mit einem Gassensor, einem Temperatursensor oder anderen benötigten Sensoren, und/oder ein Druckluftventil zur Prüfung der Dichtheit des Behälters, indem über das Ventilwerk mit dem Deckel verschlossene Behälter unter Überdruck gesetzt und das Druckhalten bzw. der Druckverlust über eine definierte Zeit gemessen wird. Darüber hinaus muss der Behälter natürlich die primäre Funktion der sicheren Verschließung des Behälters und somit ein Sicherheits-Schließsystem enthalten, welches nur mittels eines Schlüssels, einer Codierung oder Ähnlichem, also nur von berechtigten Personen, zu öffnen ist. Auch die optische Anpassung der Deckel-Oberfläche an die Umgebung ist von Bedeutung, um den Behältereinstieg optisch so unauffällig wie möglich zu gestalten. Hierfür können mehrere Deckelgestaltungen oder Deckelmaterialien wahlweise zur Verfügung gestellt werden.

Der Behälterdeckel kann auch mehrteilig ausgebildet sein, wobei die zu erfüllenden Funktionen auf die mehreren Teile verteilt werden können. So kann beispielsweise über den eigentlichen, den Behälter dicht verschließenden und absperrbaren, Behälterdeckel eine zusätzliche Abdeckung gelegt werden, deren Funktion hauptsächlich die Kraftaufnahme beim Begehen und Befahren ist. Eine solche Abdeckung muss nicht zusätzlich gesichert werden, kann also theoretisch von jedermann entfernt werden, in der Praxis aufgrund hohen Gewichts (Stahlplatte, Betonplatte oder Ähnliches), jedoch nur mit Hilfsgeräten bewegt werden.

Aus dem gleichen Grund wird der obere, begehbare und befahrbare Rand des Behälters um die obere Öffnung herum vorzugsweise mittels stärker belastbarer Materialien verstärkt, beispielsweise durch Auflegen eines Metallringes, vorzugsweise mit einem z. B. U-förmigen oder L-förmigen Querschnitt.

Der Behälter weist weiterhin wenigstens einen, insbesondere in der Aufsicht betrachtet über den Umfang verteilt mehrere, nach außen vorstehende Stutzen auf, die am freien äußeren Ende dicht geschlossen sind und damit einen vom Innenraum her zugänglichen inneren Freiraum aufweisen. Diese Behälterstutzen weisen einen solchen Querschnitt auf, dass nach Abschneiden des freien Endes eines solchen Stutzens die zur Versorgung der Schaltschrank-Komponenten in den Behälter einzuführenden Erdkabel durch einen solchen Stutzen hindurchgeführt und im axialen Verlauf des Stutzens ausreichend abgedichtet werden können, so dass Grundwasser nicht in den Behälter eindringen kann. Da die Schaltschrank-Komponenten immer in der gleichen Position verbleiben, und damit auch die mit diesen verbundenen Erdkabel, werden die Erdkabel relativ zu diesem Behälterstutzen nicht bewegt, so dass die Abdichtung über lange Zeit dicht bleibt.

Die Stutzen befinden sich dabei in einer vorgegebenen Höhe unterhalb der Öffnung, wie sie für das Verlegen von Erdkabeln im Untergrund vorgeschrieben ist, so dass die Erdkabel keine oder nur eine geringe Höhendifferenz zwischen ihrer Normallage im Untergrund und dem Behälterstutzen überwinden müssen, was die benötigte Größe der Grube reduziert.

### Weiterhin können diese Behälterstutzen auch für andere Zwecke verwendet werden:

Von einem solchen geöffneten Stutzen aus kann eine Rohrführung zur Erdoberfläche geführt werden, und hierüber können eine oder mehrere der Zusatzvorrichtungen, die vorstehend als mögliche Bestandteile des Behälterdeckels beschrieben wurden, untergebracht werden. Ebenso können zwei solcher Stutzen beispielsweise - nach Öffnen der entsprechenden beiden Behälterstutzen - zum Verbinden zweier geöffneter Stutzen über einen Kühlschlauch, der dazwischen im Erdreich um den Behälter herum verlegt wird. Durch einen solchen dicht an den Stutzen angesetzten Kühlschlauch kann die warme Luft, erwärmt von der Abwärme der Schaltschrank-Komponenten, hindurchgeleitet werden, um sie durch die Erdkühle herabzukühlen, bevor sie in den Behälter zurückgeleitet wird.

Dennoch ist es möglich, dass sich an den Innenwänden des Behälters Kondenswasser absetzt. Um die Temperaturdifferenz zwischen dem Innenraum des Behälters und dessen Wandung gering zu halten, ist der Behälter auf seiner Außenfläche und/oder seiner Innenfläche, vorzugsweise im oberen Bereich, mit Isoliermaterialien, beispielsweise aufgeklebten Isoliermatten, wärmegedämmt. Für den Fall, dass sich - z. B. durch Kondensierung oder auch durch unerwünschten Wassereintritt von außen - dennoch Innenwasser im Behälter ansammelt, sind mehrere Möglichkeiten der Beseitigung denkbar:

Entweder ist an einem tief liegenden Punkt des Bodens des Behälters eine Ablauf-Membran angeordnet, die Flüssigkeit nur in einer Richtung, nämlich von innen nach außen, durchdringen lässt, nicht jedoch in der Gegenrichtung. Dadurch wird Eindringen von Umgebungswasser von außen verhindert. Das Durchdringen von innen nach außen geschieht zwar langsam mit wenigen Millilitern pro Stunde, jedoch ist dies für das Abführen von Kondenswasser ausreichend.

Eine andere Möglichkeit besteht darin, im Inneren einen Feuchtigkeitssensor anzuordnen, der bei Ansammeln von Feuchtigkeit, insbesondere Innenwasser, entweder nur ein Warnsignal abgibt, woraufhin dieses Innenwasser manuell entfernt werden muss oder eine Pumpe betätigt wird, die von einem tief liegenden Punkt des Behälters aus über eine Leitung nach außen abpumpt, insbesondere über die obere Öffnung oder einen nahe der oberen Öffnung vorhandenen Austrittspunkt der Pumpenleitung.

Ebenso kann eine Abpump-Möglichkeit für sich im Behälter ansammelnde Gase notwendig sein, die ebenfalls mittels einer Leitung - entweder über einen der Stutzen oder über einen Auslass nahe der oberen Öffnung oder im Deckel - über eine Schlauchleitung abgeführt werden müssen. Dies ist insbesondere dann der Fall, wenn im Inneren des Behälters zur Versorgung der elektrischen Komponenten Pulverbatterien eingesetzt werden, die üblicherweise Gas abgeben.

Sofern der Behälter aus Kunststoff besteht, kann er insbesondere - zumindest teilweise - aus durchsichtigem Kunststoff bestehen, wodurch durch die Behälterwandung hindurch der Stand des Grundwassers jederzeit beobachtbar ist.

Durch diese Ausbildung eines unterirdischen Schaltschrankes im Behälter ist eine Installation des unterirdischen Schaltschrankes möglich, die in zwei Phasen abläuft, nämlich einerseits Ausstattung des Behälters werkseitig mit den benötigten Anpassungen an die Verwendung für Schaltschränke und andererseits Maßnahmen, die vor Ort, also nach Verbauen des Behälters im Untergrund, erfolgen:

In der ersten Phase wird der Behälter, bereits einstückig ausgestattet mit den nach innen ragenden Befestigungsvorsprüngen für z. B. das Schaltschrankgestell und die Leiter sowie nach außen abragenden Behälterstutzen, beim Schaltschrankaufsteller angeliefert. Dort werden die vor Ort benötigten Innenausstattungen in den Behälter eingebaut, nämlich einerseits die Leiter bzw. entsprechende Trittvorrichtungen zum Hinabsteigen in den Behälter, andererseits eine oder mehrere Laufflächen im Inneren auf dem Boden des Behälters zum Daraufgehen eines Monteurs und des weiteren das Schaltschrankgestell, an dem später die Schaltschrank-Komponenten befestigt werden.

Gegebenenfalls wird auch ein metallener Verstärkungsring auf den oberen Rand der Öffnung, also das obere Ende des Halses des Behälters, aufgesetzt. Sofern bereits klar ist, welche Schaltschrank-Komponenten wo im Schaltschrankgestell des Behälters benötigt werden, können auch diese bereits werkseitig vormontiert werden, in der Regel geschieht das Anbringen der Schaltschrank-Komponenten jedoch vor Ort nach Montage des Behälters im Untergrund.

Auch eine eventuelle Pumpe und/oder ein Feuchtigkeitssensor werden bereits werkseitig vormontiert, und die Außenseite des Behälters wird ggf. mit Isoliermaterial belegt bzw. beklebt.

In dem so ausgestatteten Zustand wird der Behälter - aufgehängt an einem Kran, vorzugsweise an an der Behälteroberseite vorhandenen Aufhängevorrichtungen wie etwa Ösen - zum Einsatzort verbracht, womit die zweite Phase der Montage beginnt:

Der Behälter wird in die ausgehobene Grube auf eine Schicht eines sauberen und gut ausgleichenden Verfüllmaterials wie etwa Rollkies so abgesetzt und positioniert, dass sich der obere Rand des Halses des Behälters, also die obere Öffnung, auf Erdgleiche befindet, und in diesem Zustand der Freiraum um den Behälter herum verfüllt und ausreichend verdichtet, um spätere Setzungserscheinungen des Verfüllmaterials vorwegzunehmen. Vorher jedoch wird zumindest einer der nach außen vorstehenden und im Ausgangszustand geschlossenen Behälterstutzen durch Absägen der Endkappe geöffnet und die in die Baugrube hineinragenden Erdkabel werden durch den offenen Behälterstutzen ins Behälterinnere zu dem Schaltschrankgestell geführt.

In gleicher Weise können ggf. auch weitere Stutzen bzw. Stutzenpaare geöffnet und mit einem Kühlschlauch verbunden werden, der während des Verfüllens im Verfüllmaterial oder dem weiter abliegenden Umgebungserdreich verlegt wird.

Gleichzeitig oder nach dem Verfüllen des Umgebungsbereiches verbaut ein in den Behälter hinabgestiegener Monteur die benötigten Schaltschrank-Komponenten im Schaltschrankgestell und verkabelt sie untereinander und stellt die elektrische Verbindung mit den zugeführten Erdkabeln her.

Nach dem Aktivieren der Schaltschrank-Komponenten verlässt der Monteur den Behälter und die obere Öffnung des Behälters wird durch den Deckel dicht verschlossen, der z. B. mit Hilfe eines Schlosses, gegenüber dem Behälter nicht nur verriegelt, sondern abgesperrt wird.

Dabei kann das Schaltschrankgestell selbst wiederum eine Kühlluftführung besitzen, indem es beispielsweise einwandig oder sogar doppelwandig beplankt ist, und die Abwärme vorzugsweise abgeführt wird durch kaminartig bedingtes Ansteigen der Luft im Zwischenraum der Doppelwand nach oben. Dort kann die erwärmte Luft zusätzlich noch durch Luftführungsvorrichtungen gesammelt und z. B. dem Kühlschlauch zugeführt werden, um das Temperaturniveau dieser Luft nicht durch die restliche Luft im Behälter abzusenken, was ein Herabkühlen durch die Erdkühle erschwert.

### c) Ausführungsbeispiele

Ausführungsformen gemäß der Erfindung sind im Folgenden beispielhaft näher beschrieben. Es zeigen:
- Fig. 1:: den fertig montierten und im Betrieb befindlichen unterirdischen Schaltschrank,
- Fig. 2:: den Ablauf bei der Montage des unterirdischen Schaltschrankes, und
- Fig. 3:: in der Aufsicht betrachtet unterschiedliche Behälterformen bei einem unterirdischen Schaltschrank.

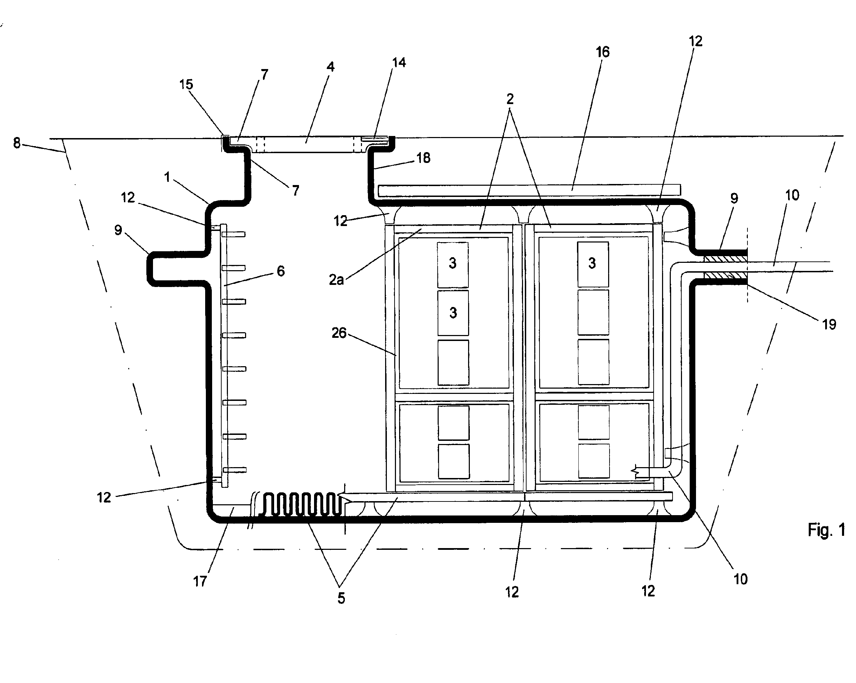

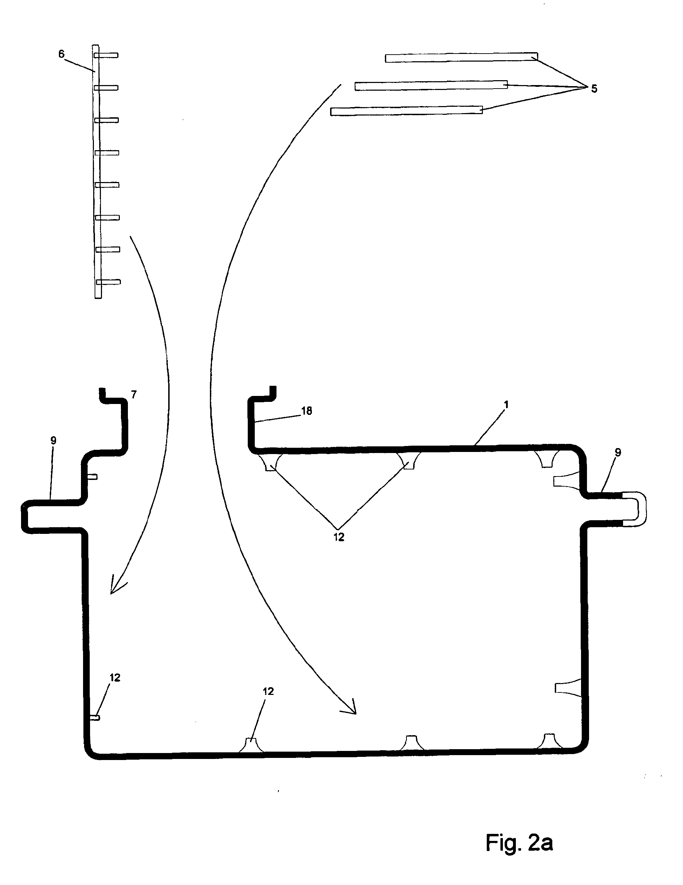

Fig. 1 zeigt den Endzustand des in Betrieb befindlichen unterirdischen Schaltschrankes, wie er durch die Montageschritte gemäß der Fig. 2a bis 2d erreicht wird:

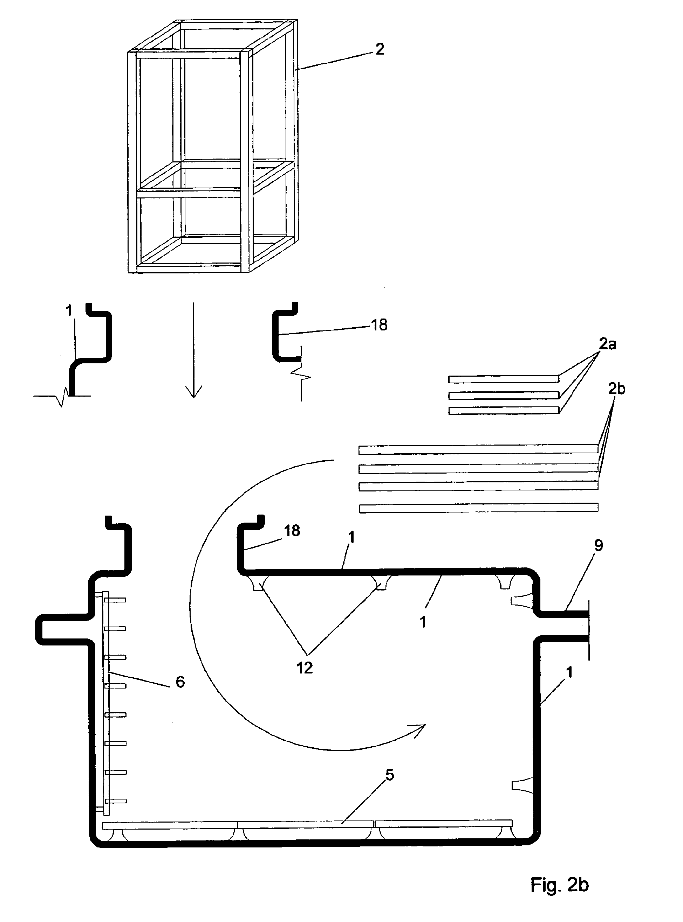

Dabei zeigen die Fig. 2a und 2b die vorab und damit werkseitig durchführbare Innenausstattung des Behälters, die somit witterungsunabhängig und unter optimalen Bedingungen erfolgen kann:

Zunächst werden in den Behälter 1, dessen Behälterstutzen 9 allesamt noch geschlossen sind, nacheinander zunächst die Leiter 6 bzw. einzelne Trittvorrichtungen und anschließend z. B. Elemente für die Lauffläche 5 durch die obere Öffnung 7 und den Hals 8 ins Innere des Behälters 1 verbracht und dort - vorzugsweise an den entsprechenden Befestigungsvorsprüngen 12 - befestigt. Hierfür kann der Behälter 1 in die am besten geeignete Lage, beispielsweise nicht aufrecht stehend wie in Fig. 2a dargestellt, sondern auch liegend, positioniert werden, was beispielsweise das Fixieren der Leiter 6 an den dafür vorgesehenen Befestigungspositionen an der Innenwand erleichtert.

Sofern als Trittfläche und gleichzeitig zur Beschwerung des Behälters eine Betonplatte ins Innere des Behälters auf dessen Boden vergossen wird, erfolgt dies ebenfalls vorab, wobei dann vorzugsweise eine solche gegossene Bodenplatte aus Beton gleichzeitig als Lauffläche für den Monteur und als Befestigungsmöglichkeit für Schaltschrankgestelle, nämlich zum Anbohren und Verschrauben der Schaltschrankgestelle, dient.

Bei lose verlegten Trittflächen 5 werden diese in Form von einzelnen Teilstücken durch den Hals 18 in den Behälter gebracht und auf den bodenseitigen Befestigungsvorsprüngen hierfür verschraubt.

In gleicher Weise wird auch das Schaltschrankgestell 2 durch den Hals 18 in den Behälter 1 gebracht und dort an den entsprechenden Befestigungspunkten 12 sowohl zur Seitewand und/oder auch zur Oberseite des Behälters hin und/oder zu dessen Boden hin befestigt, insbesondere verschraubt. Je nach Relation des Schaltschrankgestells 2 zum Durchmesser des Halses 18, der üblicherweise den geringsten freien Querschnitt beim Eingang in den Behälter 1 darstellt, und/oder der oberen Öffnung 7 wird das Schaltschrankgestell im Ganzen durch den Hals 18 in den Behälter eingebracht oder in Form von einzelnen Gestellteilen 2a, b bzw. vorgefertigten ausreichend kleinen Komponenten bzw. Rahmenteilen, wie in Fig. 2b dargestellt, und erst im Inneren des Behälters 1 zu einem in sich geschlossenen Gestell zusammengebaut.

In diesem Zustand kann auch der für das Einführen der Erdkabel benötigte Behälterstutzen 9 durch Abschneiden seines geschlossenen freien Endes geöffnet werden. Ebenso kann dies jedoch auch erst vor Ort auf der Baustelle erfolgen.

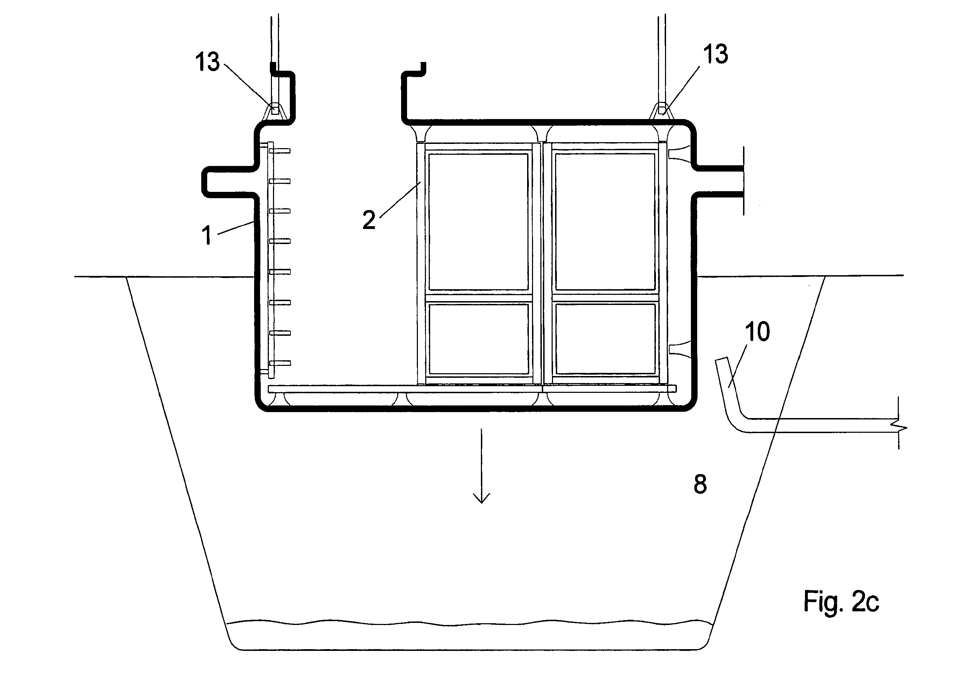

Fig. 2c zeigt, wie der so ausgestattete Behälter 1, aufgehängt an seinen an der Oberseite außen vorhandenen, insbesondere einstückig mit angespritzten Aufhängeösen 13, von einem nicht dargestellten Ladekran oder ähnlichem in die Baugrube 8 auf einer darin ausgebrachten und höhennivellierten Schicht aus Rollkies oder ähnlichem abgesetzt wird. Die Erdkabel 10 reichen dabei vom umgebenden Erdreich aus in die Grube 8 hinein.

In diesem Ausstattungszustand, also beispielsweise ausgestattet mit Leiter, Trittflächen und einem oder mehreren Schaltschrankgestellen beträgt das Gesamtgewicht des Behälters 1 lediglich 100 kg bis 200 kg, sofern nicht eine beschwerende Innenplatte aus z. B. Beton zusätzlich angeordnet wurde, so dass der Behälter relativ leicht zu handhaben ist.

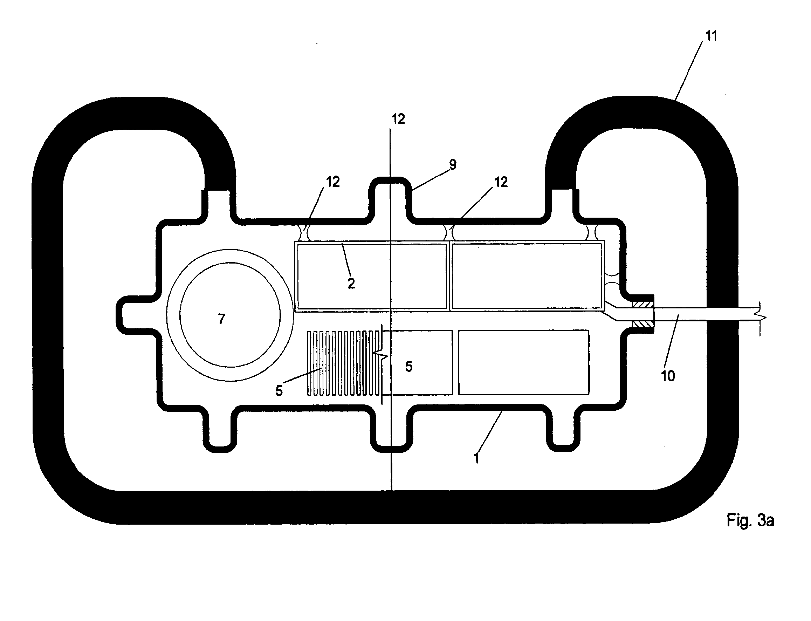

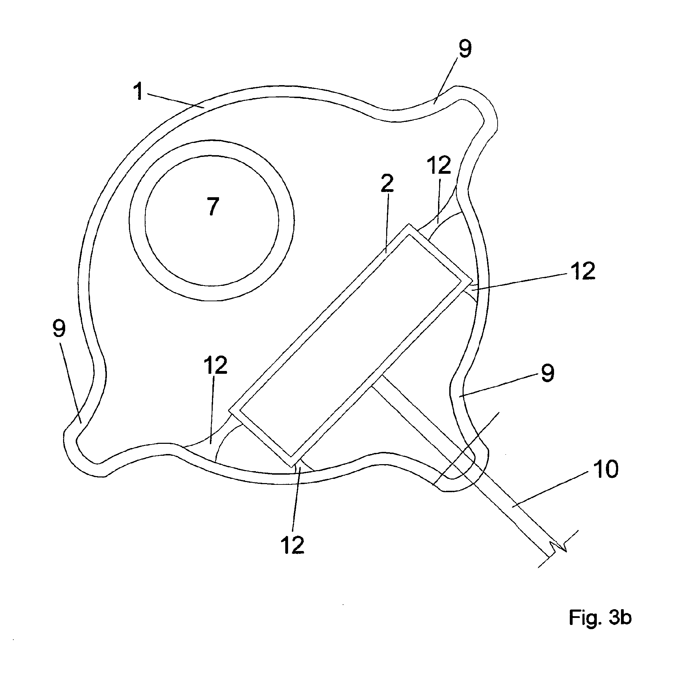

Fig. 3 zeigt, wie zunächst das frei auslaufende Erdkabel 10 durch den geöffneten Behälterstutzen ins Innere des Behälters eingefädelt wird und die benötigten Schaltschrank-Komponenten 3 durch den Hals 18 in den Behälter 1 abgelassen und dort von einem Monteur am Schaltschrankgestell 2 befestigt werden. Vorher, also nach dem Einfädeln des Erdkabels in den Stutzen 9, jedoch noch vor der Montage der Schaltschrank-Komponenten 3, erfolgt das Verfüllen des Freiraums um den Behälter 1 herum, einschließlich Verdichten, wobei der obere Rand des Halses 18 auf Erdgleiche gebracht wird.

Nach fertiger Montage werden die Schaltschrank-Komponenten 3 aktiviert, der Monteur verlässt den Behälter und die obere Öffnung 7 wird mittels des Behälterdeckels 4 verschlossen, indem dieser gegenüber dem Behälter 1 verriegelt und insbesondere mittels eines Schlosses 14 auch abgesperrt wird. Den so erreichten Betriebszustand zeigt Fig. 1, in der zusätzlich außen auf der Oberseite des Behälters Isoliermaterial 16 in Form einer Matte oder ähnlichem aufgelegt oder aufgeklebt ist, um die Bildung von Kondenswasser an der Oberseite des Behälters in dessen Inneren zu minimieren.

Fig. 1 zeigt ferner die Dichtung 19 zwischen dem Erdkabel und dem umgebenden Stutzen 9, durch welchen das Erdkabel 10 in den Behälter 1 gelangt, mit welcher das Eindringen von Wasser verhindert wird.

Fig. 1 zeigt ferner auf der linken Seite der Öffnung 7 einen Metallring 15, der umlaufend auf dem freien oberen Rand des Halses 18 aufliegt und dessen Verstärkung sowie der Kraftverteilung dient.

In Fig. 1 ist ferner die Möglichkeit einer eingegossenen Betonplatte 17 im äußersten linken Bereich zu erkennen.

Die Figuren 3 zeigen bereits mit einem Schaltschrankgestell ausgestattete Behälter 1 von unterschiedlicher Grundrissform in der Aufsicht.

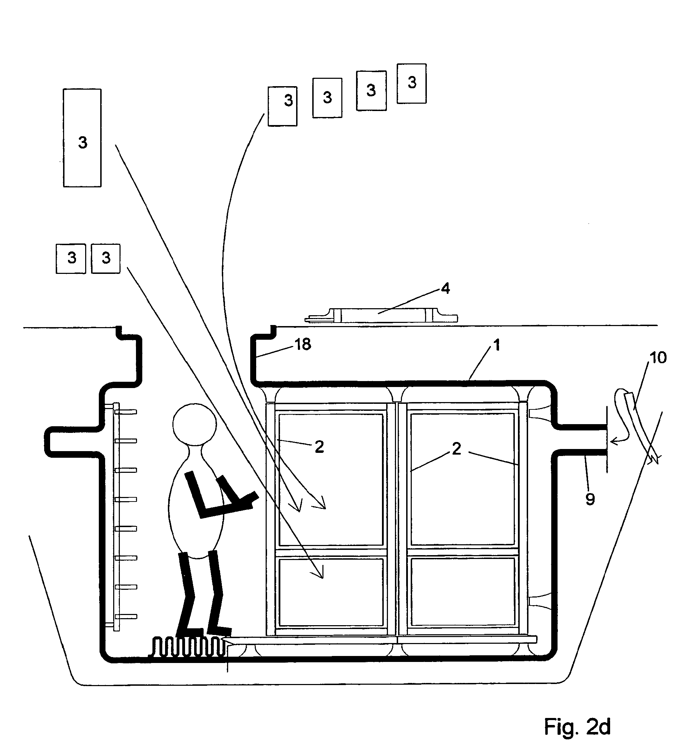

Dabei entspricht Fig. 3a beispielsweise dem in den Fig. 1 und 2 dargestellten Behälter 1, welcher in der Aufsicht eine etwa rechteckige Grundfläche besitzt, wobei die obere Öffnung 7 sich nahe der einen Schmalseite befindet. In dem verbleibenden Grundflächenbereich abseits der oberen Öffnung 7 sind entlang der einen Seitenwand zwei Schaltschrankgestelle 2 im Behälter 1 verbaut, während parallel dazu, also entlang der gegenüberliegenden Seitenwand, die Laufflächen 5 zum Stehen des Monteurs angeordnet sind.

Ferner zeigt Fig. 3a, dass durch den einen der Behälterstutzen 9 das bzw. die Erdkabel 10 ins Innere des Behälters 1 geführt werden und bis zum Schaltschrankgestell 2 reichen, während zwei andere Stutzen ebenfalls geöffnet sind und über einen Kühlschlauch 11, dessen freie Enden mit jeweils einem der Stutzen 9 dicht verbunden sind, miteinander in Verbindung stehen. Dabei verläuft der Kühlschlauch 11 außerhalb des Behälters durch das umgebende Erdreich, insbesondere das Verfüllmaterial, und dient dem Abkühlen der Luft im Innenraum des Behälters, die durch die Abwärme der Schaltschrank-Komponenten 3 aufgeheizt wird. Das Hindurchführen durch den Kühlschlauch 11 kann aktiv mittels eines Lüfters oder passiv durch natürliche Zirkulation geschehen, wobei insbesondere eine Luftführung von der Oberseite des Schaltschrankgestells 2 aus, an der sich die warme Luft sammelt, insbesondere wenn eine doppelwandige Luftführung am Schaltschrankgestell 2 vorhanden ist, direkt in den Kühlschlauch 11 geführt werden kann.

### BEZUGSZEICHENLISTE

- 1: Unterflur-Behälter
- 2: Schaltschrankgestell
- 2a,b,c: Gestell-Teile
- 3: Schaltschrank-Komponenten
- 4: Deckel
- 5: Lauffläche
- 6: Leiter
- 7: obere Öffnung
- 8: Grube
- 9: Behälterstutzen
- 10: Erdkabel
- 11: Kühlschlauch
- 12a, b,c: Befestigungsvorsprung
- 13: Öse
- 14: Schloss
- 15: Metallring
- 16: Isoliermaterial
- 17: Betonplatte
- 18: Hals
- 19: Dichtung

## Patentansprüche

1. Unterirdischer Schaltschrank mit
- einem im Untergrund fixierten Unterflur-Behälter (1) mit einer oberen Öffnung (7),
- wenigstens einem Schaltschrankgestell (2) zum Befestigen der Schaltschrank-Komponenten (3a,b,c),
- einem oberen Behälter-Deckel (4),
- wobei das Schaltschrankgestell (2) positionsfest im Unterflur-Behälter angeordnet, insbesondere befestigt, ist
**dadurch gekennzeichnet, dass**
- der Deckel (4) mehrteilig ausgebildet ist aus einem die obere Öffnung des
Behälters dicht verschließenden Verschlussdeckel sowie einem darüber angeordneten, die Belastung durch Begehen und Befahren aufnehmenden zusätzlichen Belastungsdeckel,
- der Behälterdeckel (4) oder der Behälter nahe dessen oberer Öffnung (7), ein Meldesystem, enthält, welcher die Öffnung des Deckels automatisch an eine Kontrollstelle meldet.

2. Unterirdischer Schaltschrank nach Anspruch 1,
**dadurch gekennzeichnet, dass**
- die obere Öffnung (7) ausreichend groß dimensioniert ist zum Hindurchsteigen eines Menschen, und/oder insbesondere
- im Inneren des Unterflur-Behälters (1) eine Leiter (6) bzw. Trittvorrichtungen zum Hinabsteigen eines Benutzers in den Behälter angeordnet sind, insbesondere unterhalb der oberen Öffnung (7) und befestigt an der Innenwand des Behälters (1), und/oder insbesondere
- der Boden im Inneren des Behälters (1) in definierten Flächenbereichen mit einer trittfesten Lauffläche (6) ausgestattet ist.

3. Unterirdischer Schaltschrank nach einem der vorhergehenden Ansprüche, **dadurch gekennzeichnet, dass**
- im Inneren des Behälters (1) an den Wänden und/oder dem Boden Befestigungspunkte, insbesondere in Form von nach Innen vorstehenden Befestigungs-Vorsprüngen (12), für das Schaltschrankgestell angeordnet sind, die insbesondere einstückig zusammen mit dem Behälter (1) ausgebildet sind, und/oder insbesondere
- der Unterflur-Behälter (1) flüssigkeitsdicht, insbesondere einstückig, ausgebildet ist bis auf die obere Öffnung (7), und/oder insbesondere
- die obere Öffnung (7) mittels des Behälter-Deckels (4) flüssigkeitsdicht verschließbar und insbesondere der Deckel (4) absperrbar ist.

4. Unterirdischer Schaltschrank nach einem der vorhergehenden Ansprüche, **dadurch gekennzeichnet, dass**
- der Unterflur-Behälter (1) in einer definierten Höhenlage, entsprechend der Tiefe von Erdkabeln (10), wenigstens einen nach außen weisenden, hohlen Behälterstutzen (9) aufweist, der insbesondere einstückig zusammen mit dem Behälter (1) ausgebildet ist, und/oder insbesondere
- der Behälter (1) in der Aufsicht betrachtet über seinen Umfang verteilt mehrere Behälterstutzen (9a,b,c) aufweist.

5. Unterirdischer Schaltschrank nach einem der vorhergehenden Ansprüche, **dadurch gekennzeichnet, dass**
- der Unterflur-Behälter (1) auf seiner Außenseite im oberen Bereich wenigstens einen, vorzugsweise zwei, Aufhängevorrichtungen, insbesondere Befestigungsösen (13), aufweist, die insbesondere einstückig zusammen mit dem Behälter (1) ausgebildet sind, und/oder insbesondere
- der Unterflur-Behälter (1) aus Kunststoff, insbesondere Polyethylen, besteht, und/oder insbesondere
- der Behälter (1) wenigstens teilweise aus durchsichtigem Material besteht.

6. Unterirdischer Schaltschrank nach einem der vorhergehenden Ansprüche, **dadurch gekennzeichnet, dass**
- der Unterflur-Behälter (1) in seinem Boden, insbesondere dem tiefsten Punkt des Bodens, eine von Flüssigkeit nur in einer Richtung durchdringbare Ablauf-Membran (14) für Innenwasser aufweist, und/oder insbesondere
- der Deckel (4) aus Metall, insbesondere aus Stahlguss, besteht.

7. Unterirdischer Schaltschrank nach einem der vorhergehenden Ansprüche, **dadurch gekennzeichnet, dass**
eine integrierte Be- und/oder Entlüftung, ggf. mit Filter, und/oder ein Druckluftventil zum Zwecke des Aufpumpens des Inneren des Behälters mit Überdruck und Prüfen dessen Dichtigkeit aufweist.

8. Unterirdischer Schaltschrank nach einem der vorhergehenden Ansprüche, **dadurch gekennzeichnet, dass**
- der obere Rand der Öffnung (7) durch Metall, insbesondere durch einen auf den oberen Rand der Öffnung (7) aufgesetzten Metallring (15), verstärkt ist, und/oder insbesondere
- die Behälterstutzen (9) an ihrem äußersten Ende geschlossen sind und damit einen vom Innenraum des Behälters zugänglichen inneren Freiraum aufweisen, und/oder insbesondere
- der Behälter (1) auf seiner Außenseite, insbesondere im oberen Bereich, mit Isoliermaterial (16), insbesondere aus geschäumten Kunststoff, belegt, insbesondere beschichtet, ist.

9. Unterirdischer Schaltschrank nach einem der vorhergehenden Ansprüche, **dadurch gekennzeichnet, dass**
- der Behälter (1), insbesondere im Bodenbereich und insbesondere im Inneren, durch Gewichte, insbesondere in Form einer z. B. eingegossenen Betonplatte (17), beschwert ist, und insbesondere
- die Betonplatten (17) gleichzeitig als Lauffläche (5) und/oder als Befestigungspunkte für das Schaltschrankgestell (2) im Bodenbereich, dienen.

10. Unterirdischer Schaltschrank nach einem der vorhergehenden Ansprüche, **dadurch gekennzeichnet, dass**
- im Inneren des Behälters (1) ein Feuchtigkeitssensor, insbesondere in der Nähe des Bodens, angeordnet ist, und/oder
- im Inneren des Behälters (1) eine - insbesondere mittels eines Feuchtigkeitssensors automatische angesteuerte - elektrische Pumpe zum Abpumpen von Bodenwasser vorhanden ist, die über eine Rohrleitung von einem tief liegenden Punkt des Behälter-Innenraumes aus Innenwasser über die obere Öffnung oder eine nahe der oberen Öffnung liegende Auslassöffnung aus dem Behälter herauspumpt.

11. Verfahren zum Installieren eines unterirdischen Schaltschrankes
gemäss Anspruch 1,
mit folgenden Verfahrensschritten:
a) ggf. Ausstatten des Behälters (1) mit einer Lauffläche (5) im Inneren des Behälters (1),
b) ggf. Anbringen einer Leiter (6) bzw. von Trittvorrichtungen an der Innenwand des Behälters (1),
c) Einbringen des Schaltschrankgestells (2), ggf. in Einzelteilen (2a,b..), in den Behälter (1) durch dessen obere Öffnung (7),
d) Ausheben einer Grube (8) im Untergrund,
e) Einbringen des wie vorbeschrieben ausgestatteten Behälters (1) in die Grube (8),
f) Öffnen eines Behälterstutzens (9a) und Einführen des wenigstens einen Erdkabels (10) in den Behälter (1),
g) Verfüllen des Freiraumes um den Behälter herum bis auf die obere Öffnung (7),
h) anschließender Einbau der Schaltschrank-Komponenten (3a,b,c) in das Schaltschrankgestell (2),
i) Anschließen des wenigstens einen Erdkabels (10) an die Schaltschrank-Komponenten (3a,b,c) und
j) Verschließen der oberen Öffnung (7) mit dem Behälter-Deckel (4)
k) vor dem Verfüllen des Freiraumes zwei weitere Behälterstutzen (9b, c) geöffnet und mittels eines Kühlschlauches (11) verbunden werden, der im Freiraum um den Behälter (1) herum im Erdreich bzw. im Verfüllmaterial verlegt wird.

12. Verfahren nach Anspruch 11,
**dadurch gekennzeichnet, dass**
- der Unterflur-Behälter (1) in der Grube (8) so positioniert wird, dass der obere Rand des Behälters (1), insbesondere dessen oberer Öffnung (7) bündig mit der Erdoberfläche liegt, und/oder insbesondere
- beim Verfüllen des Freiraumes um den Behälter (1) herum auch der Behälter (1) mit Verfüllmaterial überdeckt wird bis auf den zur oberen Öffnung (7) führenden Hals (18) des Behälters, und/oder insbesondere
- zum Verschließen des Behälters der Deckel (4) gegenüber dem Behälter (1) verriegelt, insbesondere mittels eines Schlosses, in der verriegelten Stellung gesichert, wird.

13. Verfahren nach einem der vorhergehenden Verfahrensansprüche, **dadurch gekennzeichnet, dass**
- das Luftführungssystem des Schaltschrankgestells (2) mit dem einen der beiden Kühlschlauch-Stutzen luftführend verbunden wird.

14. Verfahren nach einem der vorhergehenden Verfahrensansprüche, **dadurch gekennzeichnet, dass**
als Luftführungsvorrichtung das Schaltschrankgestell (2) doppelwandig beplankt und im Zwischenraum der Doppelwand die Kühlluftführung kaminartig von unten nach oben installiert und am oberen Ende des Schaltschrankgestells die Kühlluft gesammelt und weitergeführt wird.

## Claims

1. An underground electrical cabinet, comprising:
- an underground container (1) fixated in the ground comprising an upper opening (7),
- at least one electrical cabinet frame (2) for attaching electrical cabinet components (3a,b,c),
- an upper container cover (4),
- wherein the electrical cabinet frame (2) is arranged fixated in position in the
underground container, in particular attached,
**characterized in that**
- the cover (4) is configured in several components including a closing cover closing the upper opening of the container tightly and an additional load bearing cover arranged there above receiving a load through walking on and driving on,
- the container cover (4) or the container includes a reporting system proximal to its upper opening (7) wherein the reporting system automatically reports opening the cover to a control location.

2. The underground electrical cabinet according to claim 1, **characterized in that**
- the upper opening (7) is sized sufficiently large for a person to climb through and/or in particular,
- a ladder (6) or step devices for a user to climb into the container are arranged in an interior of the underground container (1), in particular below the upper opening (7) are attached at an inner wall of the container (1) and/or in particular,
- the base in an interior of the container (1) is provided with a step proof walking surface (6) in defined surface portions.

3. The underground electrical cabinet according to one of the preceding claims, **characterized in that**
- in an interior of the container (1) at the walls and/or the base attachment points, in particular in the form of inward protruding attachment protruding (12) for the electrical cabinet frame are arranged which are in particular configured integrally in one piece together with the container (1) and/or in particular,
- the underground container (1) is provided liquid tight, in particular integrally provided in one piece besides the upper opening (7) and/or in particular
- the upper opening (7) is closeable liquid tight with the container cover (4) and/or in particular the cover (4) is lockable.

4. The underground electrical cabinet according to one of the preceding claims, **characterized in that**
- the underground container (1) includes at least one outward protruding container spout (9) at a defined elevation corresponding to a depth of ground cables (10), wherein the container spout (9) is configured in particular integrally in one piece with the container (1) and/or in particular,
- the container (1) includes plural container spouts (9a, b, c) distributed in top view about its circumference.

5. The underground electrical cabinet according to one of the preceding claims, **characterized in that**
- the underground container (1) includes at least one, advantageously two suspension devices in particular attachment eyelets (13) at its outside in an upper portion wherein the suspension devices are in particular integrally configured in one piece together with the container (1) and/or in particular,
- the underground container (1) is made from plastic material in particular polyethylene, and/or in particular
- the container (1) is at least partially made from transparent material.

6. The underground electrical cabinet according to one of the preceding claims, **characterized in that**
- the underground container (1) includes a drain membrane (14) for interior water in its base, in particular the lowest point of the base wherein the drain membrane passes liquid only in one direction and/or in particular,
- the cover (4) is made from metal, in particular cast steel.

7. The underground electrical cabinet according to one of the preceding claims, **characterized in that**
it includes an integrated ventilation device optionally with a filter and/or a compressed air valve for pumping the interior of the container up with positive pressure and checking its tightness.

8. The underground electrical cabinet according to one of the preceding claims, **characterized in that**
- an upper edge of the opening (7) is reinforced with metal, in particular through a metal ring (15) placed onto an upper edge of the opening (7) and/or in particular,
- the container spouts (9) are closed at their outermost end and thus include an inner cavity that is accessible from an outside of the container, and/or in particular
- the container (1) on its outside in particular in a upper portion is covered in particular coated with insulating material (16), in particular made from foamed plastic material.

9. The underground electrical cabinet according to one of the preceding claims, **characterized in that**
- the container (1) in particular in its base portion and in particular in its interior is weighted with weights, in particular configured e.g. as a cast in place concrete plate (17) and in particular,
- the concrete plate (17) is simultaneously used as a walking surface (5) and/or as attachment points for the electrical cabinet frame (2) in the base portion.

10. The underground electrical cabinet according to one of the preceding claims, **characterized in that**
- a humidity sensor is arranged in an interior of the container (1), in particular proximal to the base and/or
- in an interior of the container (1) an electrical pump is provided for pumping out bottom water that is in particular automatically controlled by the humidity sensor wherein the electrical pump pumps interior water through a conduit from a deep point of the container interior cavity through the upper opening or an outlet opening arranged proximal to the upper opening out of the container.

11. The method for installing an underground electrical cabinet according to claim 1, including the steps:
a) optionally configuring the container (1) with a walking surface (5) in an interior of the container (1),
b) optionally attaching a ladder (6) or step devices at an inner wall of the container (1),
c) introducing the electrical cabinet frame (2) optionally in components (2a, b...) into the container (1) through its upper opening (7),
d) digging out a pit (8) in the ground,
e) introducing the container (1) configured as described supra into the pit (8),
f) opening a container spout (9a) and introducing the at least one ground cable (10) into the container (1),
g) filling the free space about the container besides the upper opening (7),
h) subsequently installing the switching cabinet components (3a, b, c) into the electrical cabinet frame (2),
i) connecting the at least one ground cable (10) with the electrical cabinet components (3a, b, c) and,
j) closing the upper opening (7) with the container cover (4),
k) opening two additional container spouts (9b, c) and connecting them with a cooling hose (11) which is deployed in the free space about the container (1) in the ground or in the filling material before filling the free space.

12. The method according to claim 11,
**characterized in that**
- the underground container (1) is positioned in the pit (8) so that the upper edge of the container (1), in particular its upper opening (7) is flush with the ground and/or,
- when filling the free space about the container (1) also the container (1) is covered with filling material up to a neck (18) of the container leading to the upper opening (7) and/or in particular,
- the cover (4) is interlocked relative to the container (1) for closing the container (1), in particular secured in the interlocked position through a lock.

13. The method according to one of the preceding method claims, **characterized in that**
the ventilation system of the electrical cabinet frame (2) is connected in an air conducting manner with one of the two cooling hose spouts.

14. The method according to one of the preceding method claims, **characterized in that**
the electrical cabinet frame (2) is provided with a double walled covering to form an air duct and the cooling air duct is installed like a chimney from the bottom up in the intermediary space of the double wall and the cooling air is collected and routed at an upper end of the electrical cabinet frame.

## Revendications

1. Armoire électrique souterraine comprenant
- un conteneur enterré (1) fixé dans le sol ayant une ouverture supérieure (7),
- au moins un bâti d'armoire (2) pour fixer les composants d'armoire (3a, b, c),
- un couvercle de conteneur supérieur (4),
- le bâti d'armoire (2) étant disposé et fixé en position dans le conteneur **caractérisée en ce que**
- le couvercle (4) se compose d'un couvercle de fermeture fermant de manière étanche l'ouverture supérieure du conteneur et d'un couvercle supérieure de charge disposé au-dessus absorbant la charge de la marche et du roulement,
- le couvercle de conteneur (4) ou le conteneur proche de l'ouverture (7) comporte un système d'alarme, qui signale automatiquement l'ouverture du couvercle à un poste de contrôle.

2. Armoire électrique souterraine selon la revendication 1,
**caractérisée en ce que**
- le ouverture supérieure (7) est suffisamment large pour le passage d'un être humain et/ou en particulier
- à l'intérieur du conteneur enterré (1), il est prévu une échelle (6) respectivement des dispositifs d'échelon pour la descente d'un utilisateur dans le conteneur en particulier en-dessous de l'ouverture supérieure (7) qui sont fixés à la paroi intérieure du conteneur (1), et/ou en particulier
- le sol à l'intérieur du conteneur (1) présente des surfaces de marche définies antidérapantes (6).

3. Armoire électrique souterraine selon l'une des revendications précédentes, **caractérisée en ce qu'**
à l'intérieur du conteneur (1), il est prévu pour le bâti d'armoire, des points de fixation sur les parois et/ou le sol, en particulier sous forme de saillies de fixation (12) dirigé vers l'intérieur qui sont en particulier formés d'une seule pièce avec le conteneur (1), et/ou en particulier
- le conteneur enterré (1) étant conçu étanche aux liquides, en particulier d'un seul tenant à l'exception de l'ouverture supérieure (7), et/ou en particulier
- ladite ouverture supérieure (7) peut être bloquée par le couvercle de conteneur (4) d'une manière étanche aux liquides, et en particulier, le couvercle (4).

4. Armoire électrique souterraine selon l'une quelconque des revendications précédentes,
**caractérisée en ce que**
- le conteneur enterré (1) présente (1) dans une position en hauteur définie, correspondant à la profondeur des câbles souterrains (10) au moins une tubulure de conteneur creuse (9) dirigée vers l'extérieur, qui est réalisée en particulier d'un seul tenant ensemble avec le conteneur (1), et/ou en particulier
- le conteneur (1) présente observé en vue de dessus une pluralité de tubulures de conteneur (9a, b, c) réparties sur sa circonférence.

5. Armoire électrique souterraine selon l'une quelconque des revendications précédentes,
**caractérisée en ce que**
- le conteneur enterré (1) présente sur sa face extérieur dans la zone supérieure au moins un, de préférence deux dispositifs de suspension, en particulier des oeillets de fixation (13), qui sont formés en particulier d'une seule pièce avec le conteneur (1), et/ou en particulier
- le conteneur enterré (1) se compose au moins partiellement de matière plastique, notamment en polyéthylène, et/ou en particulier
- le conteneur (1) est constitué au moins partiellement d'un matériau transparent.

6. Armoire électrique souterraine selon l'une quelconque des revendications précédentes,
**caractérisée en ce que**
le conteneur enterré (1) présente dans son fond, en particulier au point le plus bas du fond, une membrane d'évacuation (14) pour l'eau interne, traversée dans une seule direction par le liquide, pour l'eau interne ayant dans le fond de celui-ci, en particulier au point le plus bas de la partie inférieure, d'un liquide dans une seule direction de la membrane pénétrable de l'extrémité (14) et/ou en particulier
le couvercle (4) se compose de métal, notamment d'acier coulé.

7. Armoire électrique souterraine selon l'une quelconque des revendications précédentes,
**caractérisée en ce que**
l'armoire souterraine présente une ventilation intégrée et/ou une aération, présentant éventuellement des filtres, et/ou une vanne d'air comprimé à des fins de pompage de l'intérieur du conteneur par surpression et de vérification de son étanchéité.

8. Armoire électrique souterraine selon l'une quelconque des revendications précédentes,
**caractérisée en ce que**
- le bord supérieur de l'ouverture (7) est renforcé par du métal, en particulier par anneau de métal (15) placé sur le bord supérieur de l'ouverture (7), et/ou en particulier
- la tubulure de conteneur (9) est fermée sur son extrémité la plus externe et présentent ainsi un espace libre accessible de l'intérieur du conteneur, et/ou en particulier
- le conteneur (1) est garni, en particulier revêtu sur sa face extérieure, en particulier dans la zone supérieure, de matériau isolant (16), en particulier de matière plastique cellulaire.

9. Armoire électrique souterraine selon l'une quelconque des revendications précédentes,
**caractérisée en ce que**
- le conteneur (1) est alourdi en particulier dans la zone du fond, par des poids, en particulier sous forme par exemple d'une dalle de béton (17) coulée, et en particulier
- les dalles en béton (17) servent en même temps de surfaces de marche (5) et/ou de points de fixation pour le bâti d'armoire électrique (2) dans la zone de fond.

10. Armoire électrique souterraine selon l'une quelconque des revendications précédentes,
**caractérisée en ce que**
- à l'intérieur du conteneur (1), un capteur d'humidité est disposé, en particulier à proximité du fond, et/ou en particulier
- à l'intérieur du conteneur (1), il est prévu une pompe électrique commandée en particulier automatiquement par un capteur d'humidité pour pomper l'eau de fond - en particulier au moyen d'un capteur d'humidité contrôlée automatiquement - qui pompe par un tuyau l'eau interne dans le conteneur depuis un point profond de l'espace interne de conteneur, par l'ouverture supérieur ou une ouverture d'évacuation proche de l'ouverture supérieure.

11. Procédé d'installation d'une armoire électrique souterraine selon la revendication 1, avec les étapes suivantes :
a) équipement éventuel du conteneur (1) d'une surface de marche (5) à l'intérieur du conteneur (1),
b) fixation éventuelle d'une échelle (6) ou des dispositifs d'échelon sur la paroi intérieure du conteneur (1),
c) introduction du bâti d'armoire électrique (2), éventuellement en éléments séparés (2a, b ..) dans le conteneur (1) à travers son ouverture supérieure (7),
d) excavation d'une fosse (8) dans le sous-sol,
e) introduction du conteneur (1) équipé comme décrit ci-dessus dans la fosse (8),
f) ouverture d'une tubulure de conteneur (9) et insertion d'au moins un câble souterrain (10) dans le conteneur (1),
g) remplissage de l'espace libre autour du conteneur jusqu'à l'ouverture supérieure (7),
h) montage des composants d'armoire électrique (3a, b, c) dans le bâti d'armoire (2),
i) raccordement d'au moins un câble souterrain (10) aux composants d'armoire de commande (3a, b, c) et
j) fermeture de l'ouverture supérieure (7) avec le couvercle de conteneur (4).
k) avant le remplissage de l'espace libre, ouverture et connexion de deux autres tubulures de conteneur au moyen d'un tuyau flexible de refroidissement qui est posé dans l'espace libre autour du conteneur dans la terre respectivement dans le matériau de remplissage.

12. Procédé selon la revendication 11,
**caractérisé en ce que**
- le conteneur enterré (1) est positionné dans la fosse (8) de sorte que le bord supérieur du conteneur (1), en particulier son ouverture supérieure (7) est en affleurement avec la surface de la terre, et/ou en particulier
- lors du remplissage de l'espace libre autour du récipient (1), le conteneur (1) est également recouverte du matériau de remplissage jusqu'au col (18) menant à l'ouverture supérieure (7) du conteneur et/ou en particulier
- pour la fermeture du conteneur, le couvercle (4) est verrouillé par rapport au conteneur (1), en particulier au moyen d'un verrou, dans la position verrouillée.

13. Procédé selon l'une des revendications précédentes de procédé, **caractérisé en ce que**
le système de guidage d'air du bâti d'armoire (2) est relié à l'une des deux tubulures du tuyau de refroidissement.

14. Procédé selon l'une des revendications précédentes de procédé, **caractérisé en ce que**
le bâti d'armoire (2) est réalisé comme un dispositif de guidage d'air à double paroi, et le guidage d'air de refroidissement est installé dans l'espace vide comme une cheminée de bas vers le haut, est collecté et évacué à l'extrémité du bâti d'armoire électrique.
